# EUROPEAN PATENT APPLICATION

(11) **EP 2 400 748 A2**
(43) Date of publication of application: **28.12.2011**
(21) Application number: 10738723.5
(22) Date of filing: 03.02.2010
(51) Int. Cl.: H04N 7/08, H04N 7/015

(54) **TRANSMISSION METHOD, TRANSMISSION APPARATUS, RECEIVING METHOD, AND RECEIVING APPARATUS FOR A DIGITAL MULTIMEDIA BROADCAST SERVICE**

(30) Priority: 03.02.2009 KR 20090008495; 17.09.2009 KR 20090088045; 03.02.2010 KR 20100009848
(71) Applicant: Electronics and Telecommunications Research Institute, Yuseong-gu Daejon 305-350 (KR)
(72) Inventor: KIM, Kwang-Yong, Daejeon 305-751 (KR); BAE, Byungjun, Daejeon 302-777 (KR); YANG, Kyu Tae, Daejeon 305-729 (KR); YUN, Joungil, Daejeon 305-308 (KR); LEE, Ji Bong, Busan 616-763 (KR); CHOI, Seomee, Daejeon 302-171 (KR); LEE,Gwang Soon, Daejeon 305-250 (KR); LIM, Jong Soo, Daejeon 301-831 (KR); LEE, Soo In, Daejeon 302-120 (KR)
(74) Representative: Betten & Resch
(86) International application number: PCT/KR2010/000656
(87) International publication number: WO 2010/090439

(57) **Abstract**

A transmission apparatus for broadcasting service according to the present invention includes a sync layer (SL) packetizer for receiving a base layer elementary stream and an enhancement layer elementary stream and generating an SL packet for the base layer elementary stream and an SL packet for the enhancement layer elementary stream, a packetized elementary stream (PES) packetizer for converting the SL packets into respective PES packets, a first transport stream (TS) multiplexer for multiplexing the PES packet and outputting a base layer transport stream, and a second TS multiplexer for multiplexing the PES packet and outputting an enhancement layer transport stream. The second TS multiplexer inserts a descriptor into the enhancement layer transport stream. The descriptor includes information about whether the enhancement layer transport stream is dependent on the base layer transport stream.

## Description

### [Technical Field]

The present invention relates to a transmission method, a transmission apparatus, a reception method, and a reception apparatus for a digital multimedia broadcasting service.

### [Background Art]

With the rapid progress of electronics and communication technology, a variety of wireless communication services using a wireless telecommunication network are being provided. In particular, a digital multimedia broadcasting (DMB) service has recently been provided in which television and motion pictures of a high image quality can be received anywhere using vehicle receivers or mobile receivers such as mobile terminals.

Such a DMB service provides various multimedia services, such as video, audio, and data, in mobile environments. However, because of a limited channel capacity due to a limited bandwidth, a method of using a DMB service of a layer modulation method that uses multiple layers, in addition to the existing DMB service using a single layer, has been proposed.

In the DMB service using multiple layers, supplementary data streams are inserted into the existing data streams. Accordingly, a higher valid data rate can be guaranteed, high-quality video service can be provided, and at the same time larger broadcasting service channels can be provided.

The DMB service using multiple layers refers to a service in which the stream of a base layer and the stream of an enhancement layer are modulated using respective methods, and the modulated symbol of the base layer and the modulated symbol of the enhancement layer are generated as one transport stream. If this technology is used, different data streams can be generated in a single channel and received by different reception apparatuses.

The DMB service using multiple layers needs to be compatible with the DMB service using a single layer.

### [DISCLOSURE]

### [Technical Problem]

The present invention has been made in an effort to provide a transmission method, a transmission apparatus, a reception method, and a reception apparatus for a digital multimedia broadcasting service, having an advantage of maintaining compatibility between a DMB service using multiple layers and a DMB service using a single layer by signaling an association between a plurality of streams in the DMB service using multiple layers.

### [Technical Solution]

An exemplary embodiment of the present invention provides a transmission apparatus, including a sync layer (SL) packetizer for receiving a base layer elementary stream and an enhancement layer elementary stream and generating an SL packet for the base layer elementary stream and an SL packet for the enhancement layer elementary stream, a packetized elementary stream (PES) packetizer for converting the SL packets into respective PES packets, a first transport stream (TS) multiplexer for multiplexing the PES packet and outputting a base layer transport stream, and a second TS multiplexer for multiplexing the PES packet and outputting an enhancement layer transport stream. The second TS multiplexer inserts a descriptor including information about whether the enhancement layer transport stream is dependent on the base layer transport stream into the enhancement layer transport stream.

The descriptor can further include information indicating the identifier of the base layer transport stream on which the enhancement layer transport stream is dependent.

The descriptor can further include information about a service type supported by the enhancement layer transport stream.

The descriptor can further include information indicating the length of the descriptor.

The descriptor is inserted into the program map table (PMT) of the enhancement layer transport stream.

The first TS multiplexer and the second TS multiplexer can differently set the respective program numbers (program_number) of the base layer transport stream and the enhancement layer transport stream.

Another exemplary embodiment of the present invention provides a method of a transmission apparatus for a broadcasting service transmitting a broadcasting signal, including generating SL packets for a base layer elementary stream and an enhancement layer elementary stream based on the base layer elementary stream and the enhancement layer elementary stream, converting the SL packets into respective PES packets, generating a base layer transport stream by multiplexing the PES packet, generating an enhancement layer transport stream by multiplexing the PES packet, and inserting a descriptor including information about whether the enhancement layer transport stream is dependent on the base layer transport stream into the enhancement layer transport stream.

The descriptor can further include information indicating the identifier of the base layer transport stream on which the enhancement layer transport stream is dependent.

The descriptor can further include information about a service type supported by the enhancement layer transport stream.

The descriptor can further include information indicating the length of the descriptor.

The method can further include differently setting the respective program numbers (program_number) of the base layer transport stream and the enhancement layer transport stream.

Yet another exemplary embodiment of the present invention provides a reception apparatus for broadcasting service, including a first TS demultiplexer for receiving a base layer transport stream from a transmission apparatus and demultiplexing the base layer transport stream, a second TS demultiplexer for receiving an enhancement layer transport stream from the transmission apparatus and demultiplexing the enhancement layer transport stream, a first interpreter for interpreting signaling information included in the base layer transport stream, and a second interpreter for interpreting signaling information included in the enhancement layer transport stream. The second TS demultiplexer extracts a pertinent packet of the base layer transport stream by checking a descriptor that is configured to include information about whether the enhancement layer transport stream is dependent on the base layer transport stream and that is included in the enhancement layer transport stream.

The first interpreter can include a first initial object descriptor (IOD) interpreter and a second object descriptor/binary format for scenes (OD/BIFS) interpreter, and the second interpreter can include a second IOD interpreter and a second OD/BIFS interpreter.

The descriptor can further include information indicating the identifier of the base layer transport stream on which the enhancement layer transport stream is dependent, information about a service type supported by the enhancement layer transport stream, and information indicating the length of the descriptor.

The program numbers of the base layer transport stream and the enhancement layer transport stream can be differently set, and the first TS demultiplexer and the second TS demultiplexer can extract information about the broadcasting signal using the respective program numbers.

Yet another exemplary embodiment of the present invention provides a method of a reception apparatus for a broadcasting service receiving a broadcasting signal, including receiving a base layer transport stream from a transmission apparatus and first demultiplexing the base layer transport stream and receiving an enhancement layer transport stream from the transmission apparatus and second demultiplexing the enhancement layer transport stream. The second demultiplexing can include interpreting the PMT of the enhancement layer transport stream, checking a descriptor that is included in the PMT of the enhancement layer transport stream and that is configured to include information about whether the enhancement layer transport stream is dependent on the base layer transport stream, and extracting a pertinent packet of the base layer transport stream based on the information of the descriptor.

The descriptor can further include information indicating an identifier of the base layer transport stream on which the enhancement layer transport stream is dependent, information about a service type supported by the enhancement layer transport stream, and information indicating the length of the descriptor.

The program numbers of the base layer transport stream and the enhancement layer transport stream can be differently set. The method can further include extracting information about the broadcasting signal using the respective program numbers of the base layer transport stream and the enhancement layer transport stream.

The second demultiplexing can further include synchronizing the base layer transport stream and the enhancement layer transport stream and extracting respective elementary streams from the base layer transport stream and the enhancement layer transport stream.

The method can further include interpreting the object descriptor (OD) of each of the base layer and the enhancement layer and combining the base layer and the enhancement layer.

Yet another exemplary embodiment of the present invention provides a transmission apparatus for a broadcasting service, including an SL packetizer for receiving a base layer elementary stream and an enhancement layer elementary stream and generating an SL packet for the base layer elementary stream and an SL packet for the enhancement layer elementary stream, a PES packetizer for converting the SL packets into respective PES packets, a first TS multiplexer for multiplexing the PES packet and outputting a base layer transport stream, and a second TS multiplexer for multiplexing the PES packet and outputting an enhancement layer transport stream. The first TS multiplexer inserts a descriptor, including information about an association between the enhancement layer transport stream and the base layer transport stream, information indicating the identifier of an associated transport stream, information about a service type supported by the enhancement layer transport stream, and information indicating the length of the descriptor, into the base layer transport stream.

The first TS multiplexer and the second TS multiplexer can identically set the respective program numbers of the base layer transport stream and the enhancement layer transport stream.

The first TS multiplexer and the second TS multiplexer can differently set the respective program numbers of the base layer transport stream and the enhancement layer transport stream.

Yet another exemplary embodiment of the present invention provides a transmission apparatus for a broadcasting service, including an SL packetizer for receiving a base layer elementary stream and an enhancement layer elementary stream and generating an SL packet for the base layer elementary stream and an SL packet for the enhancement layer elementary stream, a PES packetizer for converting the SL packets into respective PES packets, a first TS multiplexer for multiplexing the PES packet and outputting a base layer transport stream, and a second TS multiplexer for multiplexing the PES packet and outputting an enhancement layer transport stream. The first TS multiplexer and the second TS multiplexer maintain an identical system time clock (STC).

Yet another exemplary embodiment of the present invention provides a method of a reception apparatus for broadcasting a service receiving a broadcasting signal, including receiving a base layer transport stream from a transmission apparatus and first demultiplexing the base layer transport stream and receiving an enhancement layer transport stream from the transmission apparatus and second demultiplexing the enhancement layer transport stream. The first demultiplexing includes checking a descriptor included in the base layer transport stream and that is configured to include information about an association between the enhancement layer transport stream and the base layer transport stream, and extracting a pertinent packet of the enhancement layer transport stream based on the information of the descriptor.

The method can further include checking whether the program numbers of the enhancement layer transport stream and the base layer transport stream are identical with each other, and connecting programs having an identical program number in the enhancement layer transport stream and the base layer transport stream.

In the case in which the program numbers of the base layer transport stream and the enhancement layer transport stream are differently set, the method can further include extracting information about the broadcasting signal using the respective program numbers of the base layer transport stream and the enhancement layer transport stream.

The method can further include checking the stream type (stream_type) of the enhancement layer.

### [Advantageous Effects]

In accordance with the present invention, in a DMB service using multiple layers, compatibility between the DMB service using multiple layers and a DMB service using a single layer can be further easily maintained by signaling an association between a plurality of streams.

### [Description of the Drawings]

FIG. 1 is a block diagram of a DMB transmission apparatus using a single layer;
FIG. 2 is a block diagram of a DMB transmission apparatus according to an exemplary embodiment of the present invention;
FIG. 3 is a diagram showing two PMTs included in a base layer transport stream and an enhancement layer transport stream, respectively, which are transmitted by the DMB transmission apparatus in accordance with an exemplary embodiment of the present invention;
FIG. 4 is a diagram showing the synchronization of transport streams transmitted by the DMB transmission apparatus in accordance with another exemplary embodiment of the present invention;
FIG. 5 is a diagram showing the type of a transport stream defined by the DMB transmission apparatus in accordance with another exemplary embodiment of the present invention;
FIG. 6 is a block diagram of a DMB reception apparatus according to another exemplary embodiment of the present invention;
FIG. 7 is a flowchart illustrating a method of receiving a DMB signal according to another exemplary embodiment of the present invention;
FIG. 8 is a flowchart illustrating a method of receiving a DMB signal according to another exemplary embodiment of the present invention; and
FIG. 9 is a flowchart illustrating a method of receiving a DMB signal according to another exemplary embodiment of the present invention.

### [Mode for Invention]

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

In the entire specification, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation, and can be implemented by hardware components or software components and combinations thereof.

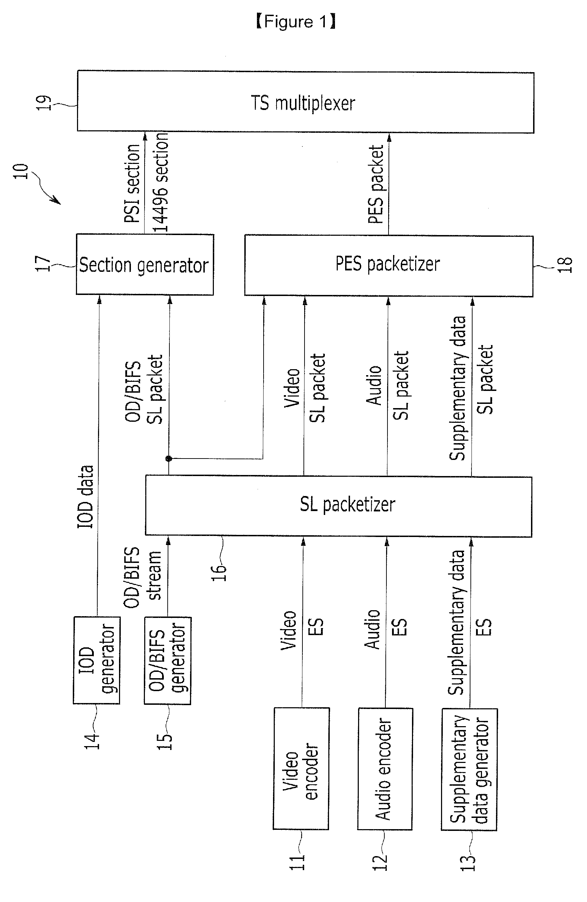

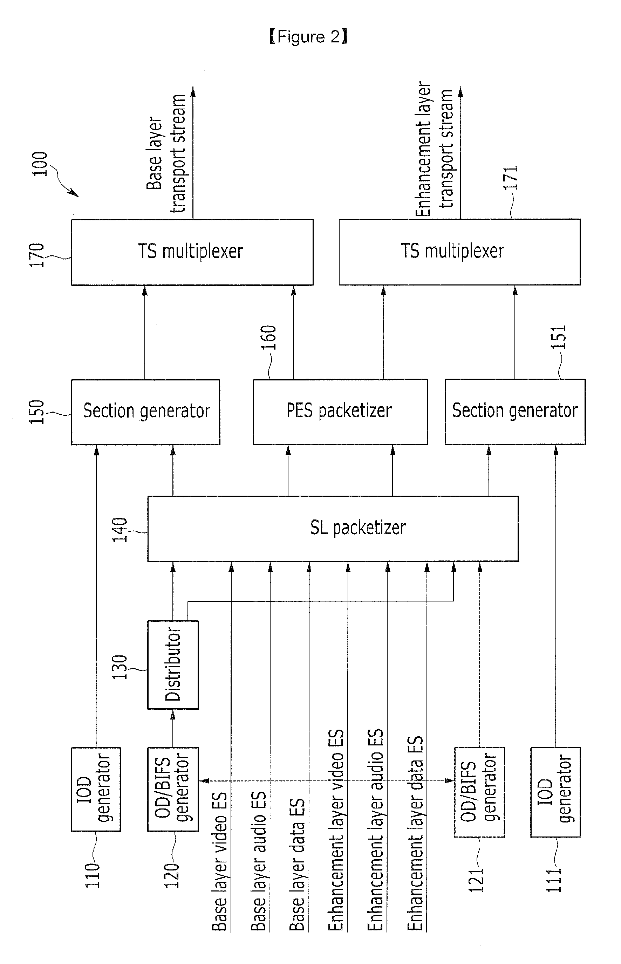

Hereinafter, a transmission apparatus for digital multimedia broadcasting (DMB) according to an exemplary embodiment of the present invention is described in detail with reference to FIGS. 1 and 2.

FIG. 1 is a block diagram of a DMB transmission apparatus using a single layer, and FIG. 2 is a block diagram of a DMB transmission apparatus according to an exemplary embodiment of the present invention.

Referring to FIG. 1, a DMB transmission apparatus 10 using a single layer includes a video encoder 11, an audio encoder 12, a supplementary data generator 13, an initial object descriptor (IOD) generator 14, an object descriptor/binary format for scenes (OD/BIFS) generator 15, a sync layer (SL) packetizer 16, a section generator 17, a packetized elementary stream (PES) packetizer 18, and a transport stream (TS) multiplexer 19.

The video encoder 11 encodes an input image signal according to video standards and outputs a video ES.

The audio encoder 12 encodes an input image signal according to audio standards and outputs an audio ES.

The supplementary data generator 13 generates supplementary data from an input image signal and outputs a supplementary data ES.

The IOD generator 14 generates IOD data and can comply with, for example, the ISO/IEC 14496-1 standards.

The OD/BIFS generator 15 generates an OD/BIFS stream and can comply with, for example, the ISO/IEC 14496-1 standards.

The SL packetizer 16 generates an SL packet (i.e., a synchronization packet between input media streams) and can comply with, for example, the ISO/IEC 14496-1 standards. That is, the SL packetizer 16 receives the OD/BIFS stream, the video ES, the audio ES, and the supplementary data ES and generates an OD/BIFS SL packet for the OD/BIFS stream, a video SL packet for the video ES, an audio SL packet for the audio ES, and a supplementary data packet for the supplementary data ES.

The section generator 17 receives the OD/BIFS SL packet and generates a 14496 section by packetizing the received OD/BIFS SL packet into the 14496 section. Further, the section generator 17 receives the IOD data and generates the received IOD data as a program-specific information (PSI) section.

The PES packetizer 18 receives the SL packet and PES-packetizes the received SL packet, and it can comply with, for example, the ISO/IEC 13818-1 standards.

The TS multiplexer 19 receives the 14496 section, the PSI section, and the PES packet and multiplexes them into a transport stream. The transport stream can be an MPEG-2 transport stream.

As described above, the DMB service transmission apparatus shown in FIG. 1 receives an input signal, generates a transport stream of a single layer, and outputs the generated transport stream.

Referring to FIG. 2, the DMB transmission apparatus 100 according to the exemplary embodiment of the present invention includes IOD generators 110 and 111, OD/BIFS generators 120 and 121, a distributor 130, an SL packetizer 140, section generators 150 and 151, a PES packetizer 160, and TS multiplexers 170 and 171.

Unlike the DMB transmission apparatus of FIG. 1, the DMB transmission apparatus 100 according to the exemplary embodiment of the present invention includes the two IOD generators 110 and 111, the two OD/BIFS generators 120 and 121, the two section generators 150 and 151, and the two TS multiplexers 170 and 171.

The SL packetizer 140 receives both the input signals of a base layer, including a base layer video ES, a base layer audio ES, and a base layer data ES, and the input signals of an enhancement layer, including an enhancement layer video ES, an enhancement layer audio ES, and an enhancement layer data ES, generates the SL packet of the base layer and the SL packet of the enhancement layer on the basis of the input signals, and outputs the generated SL packet of the base layer and the generated SL packet of the enhancement layer to the section generator 150 and the section generator 151, respectively.

The section generators 150 and 151 generate a base layer section and an enhancement layer section, and output the generated base layer section and the generated enhancement layer section to the TS multiplexers 170 and 171, respectively.

The TS multiplexers 170 and 171 generate a base layer transport stream and an enhancement layer transport stream and output them, respectively.

That is, unlike the DMB transmission apparatus 10 of FIG. 1, the DMB transmission apparatus 100 of FIG. 2 receives the input signals of multiple layers and generates the transport streams of multiple layers. The base layer transport stream generated by the DMB transmission apparatus 100 of FIG. 2 is identical to the transport stream of FIG. 1, and the enhancement layer transport stream generated by the DMB transmission apparatus 100 of FIG.2 transports a DMB signal of a high quality in addition to the transport stream of FIG. 1.

Here, a reception apparatus receives not only a DMB signal from the DMB transmission apparatus 10, but also a DMB signal from the DMB transmission apparatus 100. In this case, the DMB transmission apparatus 100 has to let dependency and a program association between the transport streams of multiple layers be known so that the reception apparatus designed suitably for the DMB signal received from the DMB transmission apparatus 10 can process the DMB signal received from the DMB transmission apparatus 100.

This is described in more detail with reference to FIG. 2.

The TS multiplexers 170 and 171 of the DMB transmission apparatus 100 of FIG. 2 insert an information descriptor, informing the reception apparatus of dependency and a program association between the base layer transport stream and the enhancement layer transport stream, into the base layer transport stream or the enhancement layer transport stream. That is, in order to describe information for a layer encoding video service using multiple layers in PSI, the information descriptor is inserted into a program map table (PMT) of the enhancement layer transport stream. In this case, as in FIG. 1, it is necessary to indicate association with an added transport stream while maintaining reverse compatibility with the transmission apparatus 10 using a single layer transport stream.

An example of the information descriptor is written in the following Table 1.

**(Table 1)**

| | | Syntnx | Na Of bits | Mnemonic |
|---|---|---|---|---|
| scaluble service pointer descriptor 0 ( | | | | |
| | descriptor tug | | 8 | uimsbf |
| | descriptor_length | | 8 | uimsbf |
| | dependency_ts_carriage_flag | | 1 | bslbf |
| | high qunlity_service_type | | 4 | uiuusbf |
| | reserved | | 3 | bslbf |
| | if(dependency is curriage- flag==1) | | | |
| | | | | |
| | | | | |
| | | dependency_transport_stream_id | 16 | Uimsbf |
| | | | | |
| | reserved | | 16 | uimsbf |

Referring to Table 1, the information descriptor according to the present exemplary embodiment is a scalable service pointer descriptor (scalable_service_pointer_descriptor).

Further, in Table 1, a descriptor length (descriptor_length) indicates the length of the scalable service pointer descriptor.

A dependency transport stream carriage flag (dependency_ts_carriage_flag) indicates whether a transport stream dependent on a base layer transport stream exists. "1" indicates that a transport stream dependent on a base layer transport stream exists, and "0" indicates an independent program unrelated to a base layer transport stream.

A high quality service type (high-quality_service_type) informs the type of a high quality service that is supported by an enhancement layer transport stream having association. The values of the high quality service type can be defined as in the following Table 2.

**(Table 2)**

| Type | Type |
|---|---|
| 00 | Reserved |
| 01 | Temporal scalable video service (SV_T) |
| 02 | Spatial scalable video service (SV_S) |
| 03 | Quality scalable video service (SV_Q) |
| 04 | Scalable audio service |
| 05 | Scalable audio service with SV_T |
| 06 | Scalable audio service with SV_T |
| 07 | Scalable audio service with SV_S |
| 08 | Scalable audio service with SV_Q |
| 09 | 3D video service |
| 10 | Stereoscopic 3D contents service |
| 11-15 | Reserved |

Referring back to Table 1, a dependency transport stream identifier (dependency_transport_stream_id) indicates the identifier (ID) of a transport stream including the program of a base layer on which this program depends.

On the one hand, the dependency transport stream identifier can include a variety of identifiers, such as an elementary program identifier (elementary_PID) identifying an elementary stream and a program number (program_number) identifying a program, in addition to a transport stream identifier (transport_stream_id) identifying a transport stream.

Meanwhile, the information descriptor can newly define only pertinent information within a hierarchy descriptor (hierarchy_descriptor) and have the newly defined information added thereto, an example of which is written in the following Table 3.

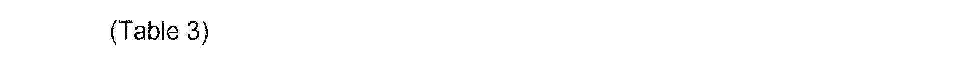

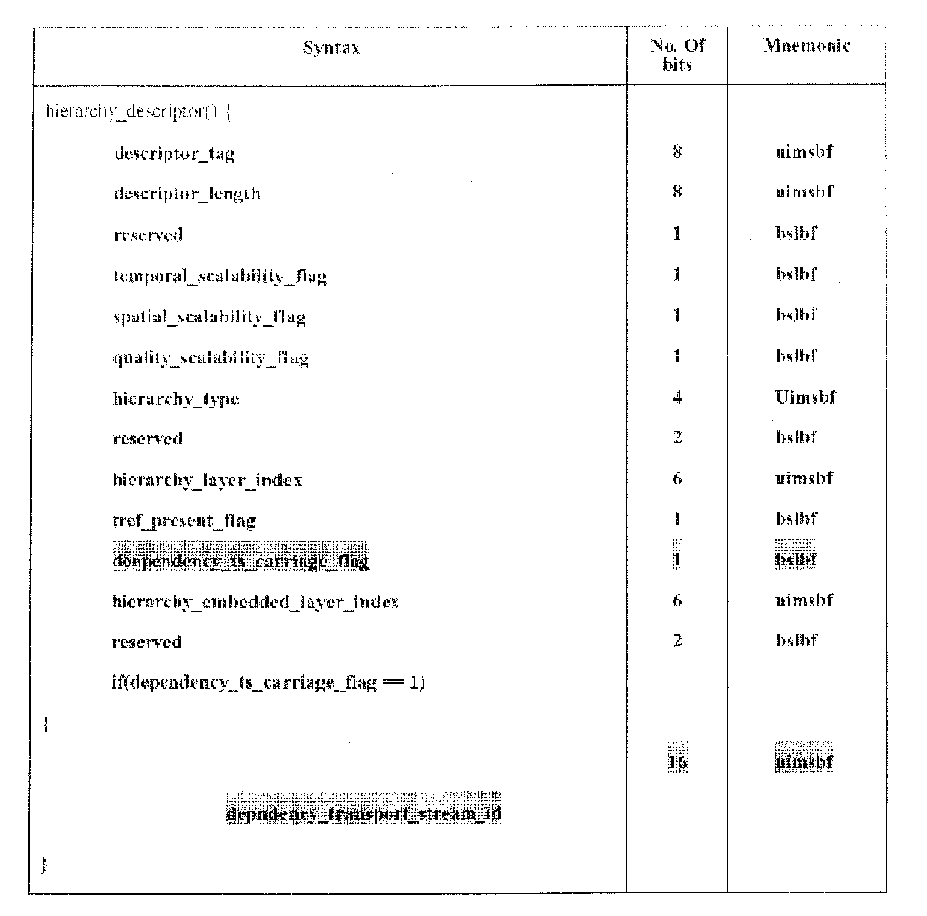

In Table 3, a dependency transport stream carriage flag (dependency_ts_carriage_flag) is used to inform whether there is a transport stream having association. A dependency transport stream identifier (dependency_transport_stream_id) indicates the identifier of an associated stream.

Meanwhile, in a DMB service using a single layer, association information between different transport streams is included in an ensemble transport interface (ETI) level including the transport streams, and a reception apparatus needs to be informed of such information. In such a case, if the reception apparatus can predict whether an enhancement layer transport stream exists in relation to DMB using multiple layers and such information, the information descriptor can be omitted. In this case, since an additional descriptor is not added for high quality service, perfect reverse compatibility with the reception apparatus for DMB using a single layer can be maintained.

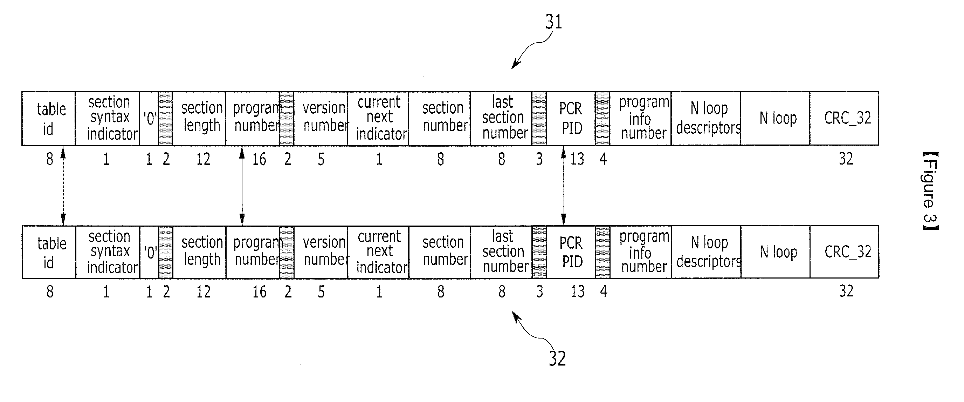

Meanwhile, in accordance with another exemplary embodiment of the present invention, the transmission apparatus 100 can make identical program numbers (program_number) between transport streams in order to inform a reception apparatus of dependency and a program association between multi-layer TSs. This is described in detail with reference to FIG. 3.

FIG. 3 is a diagram showing two PMTs included in a base layer transport stream and an enhancement layer transport stream, respectively, which are transmitted by the DMB transmission apparatus in accordance with an exemplary embodiment of the present invention.

Referring to FIG. 3, each of the PMTs 31 and 32 includes a program element transmitted through a transport stream and mapping information between program numbers. In particular, each of the PMTs 31 and 32 includes an IOD for a scene configuration, a media elementary stream, a corresponding program identifier (PID), and a descriptor including each piece of elementary stream information.

The TS multiplexers 170 and 171 generate respective PMTs and transmit the PMTs with them included in a base layer transport stream and an enhancement layer transport stream, respectively.

In this case, program number values, corresponding to broadcasting channels respectively included in the two PMTs 31 and 32, are identically set. Accordingly, what programs within the two PMTs 31 and 32 are associated with each other can be known, and association programs transmitted through different transport streams can be bundled into one broadcasting service with reference to the identically set program number.

Meanwhile, in the case of the PMT included in the enhancement layer, reference can be made to a packet identifier (PID) value included in a transport stream designated through a dependency transport stream identifier (dependency_transport_stream_id) within a scalable service pointer descriptor (scalable_service_pointer_descriptor). Here, the TS multiplexers 170 and 171 logically distinguish two programs from each other by differently setting program number values corresponding to respective broadcasting channels in order to distinguish the PMTs, respectively included in the base layer and the enhancement layer, from each other. Further, the program clock reference packet identifiers PCR_PID of the two PMTs 31 and 32 are made to be identical. Further, a reception apparatus designed to receive the transport stream of a single layer does not refer to a program element included in an additionally transmitted transport stream. Accordingly, if such a method is used, reverse compatibility with the reception apparatus designed to receive the transport stream of a single layer can be effectively maintained.

That is, the reception apparatus can perform processing in accordance with the existing method when receiving only the base layer, and can receive the two PMTs 31 and 32 and refer to only one of the two PMTs 31 and 32 according to a user choice when receiving the base layer and an enhancement layer. Accordingly, a reception apparatus receiving only the base layer according to the existing method is not influenced when providing basic services although it receives a high-quality broadcasting signal using multiple layers. Here, the TS multiplexer 171 can newly define BIFS information, transmitted through an enhancement layer transport stream, according to the type of a high quality service and transmit the newly defined BIFS information or may omit BIFS information transmitted through an enhancement layer transport stream. In other words, in the case in which high resolution services or high quality services in which resolution is changed or the configuration of scenes is varied, such as multi-view services, are provided, BIFS information for a scene configuration for additional services needs to be reconfigured and newly defined. Accordingly, a BIFS configuration is newly defined according to the type and is transmitted. On the one hand, in the case in which additional services included in BIFS information transmitted through a base layer transport stream are used according to the type of a high quality service, an IOD for high quality services can be set so that reference can be made to BIFS information within the base layer. In this case, the transmission of BIFS information within an enhancement layer can be omitted. This is for a broadcasting company to give flexibility to supplementary data services.

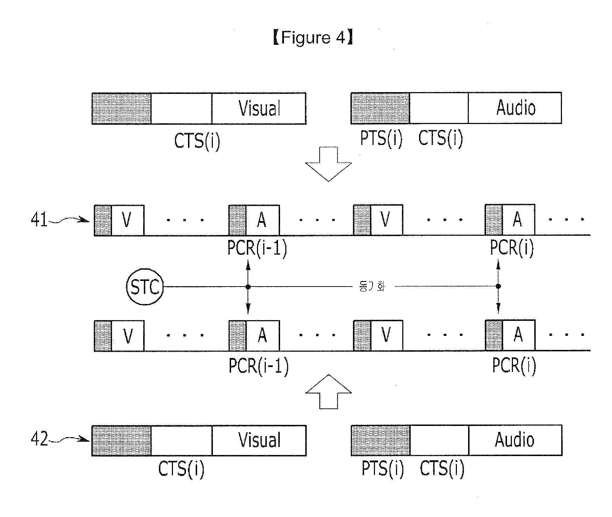

Meanwhile, in accordance with another exemplary embodiment of the present invention, the transmission apparatus 100 can make system time clocks (STCs) between the transport streams of multiple layers coincide with each other in order to inform a reception apparatus of dependency and a program association between the transport streams. This is described with reference to FIG. 4.

FIG. 4 is a diagram showing the synchronization of transport streams transmitted by the DMB transmission apparatus in accordance with another exemplary embodiment of the present invention.

Referring to FIG. 4, the TS multiplexers 170 and 171 maintain the same STC for two transport streams 41 and 42 in order to set the time base between programs transmitted through the two transport streams 41 and 42. That is, PCR values generated on the basis of the same STC are inserted into the two transport streams 41 and 42. Further, the same PCR_PID value is allocated to the two transport streams 41 and 42 so that the two transport streams 41 and 42 can be known as one program service. Moreover, presentation time stamp (PTS) values within a PES associated therewith are set to the same time base. The enhancement layer transport stream 42 can be transmitted in non-real time (NRT) or can be transmitted in conjunction with an additional network, such as a communication network, in order to provide service.

In this case, the TS multiplexers 170 and 171 need to synchronize the enhancement layer transport stream 42 on the basis of the base layer transport stream 41 because of a difference in the receiving time that occurs due to a difference in the transmitting environments between the base layer transport stream 41 and the enhancement layer transport stream 42.

Further, even in the case in which transmission between an encoder and transmission equipment is performed through a network, there can be a difference in the synchronization between the base layer transport stream 41 and the enhancement layer transport stream 42 because of a delay in the transmitting process or a difference in the initial buffering time between equipment. In this case, more buffering of as much as the difference in the synchronization is required in a decoder. Accordingly, the TS multiplexers 170 and 171 synchronize the enhancement layer transport stream 42 on the basis of the base layer transport stream 41 and transmit them. In this case, the TS multiplexers 170 and 171 can synchronize the base layer transport stream 41 and the enhancement layer transport stream 42 with reference to a PCR value, included in the enhancement layer transport stream 42, on the basis of a PCR value included in the base layer transport stream 41.

Meanwhile, a reception apparatus must simultaneously receive the base layer video stream 41 and the enhancement layer video stream 42, and thus a PCR_PID, referred by the reception apparatus, has to be set in the encoder for a high quality service so that one PCR_PID can be referred. That is, the STC of the encoder and the decoder is determined on the basis of the PCT set in the encoder. In this case, since the PCR_PID referred by the reception apparatus has to refer to one PCR_PID, a PCR value may be inserted into the enhancement layer transport stream as a reference value.

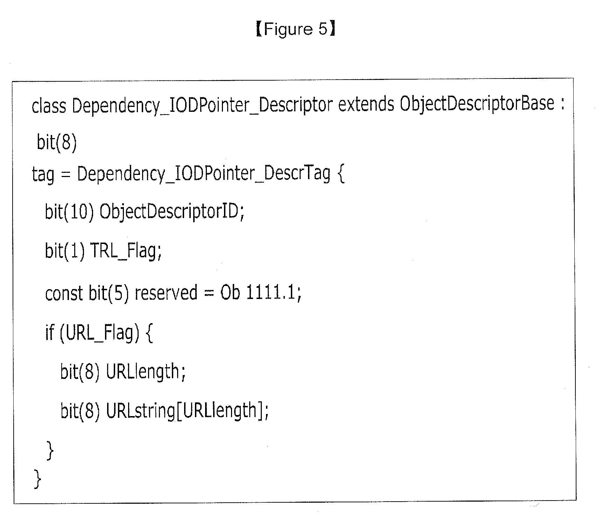

Meanwhile, in accordance with yet another exemplary embodiment of the present invention, the transmission apparatus 100 can independently define a stream type in order to inform a reception apparatus of dependency and a program association between the transport streams of multiple layers. This is described in detail with reference to FIG. 5.

FIG. 5 is a diagram showing the type of a transport stream defined by the DMB transmission apparatus in accordance with yet another exemplary embodiment of the present invention.

In general, in the case of DMB, "0x12", indicating an ISO/IEC 14496-1 SL-packetized stream in the PES packets complying with the ISO/IEC 14496-1 standards, and "0x13", indicating an ISO/IEC 14496-1 SL-packetized stream in the PES packets in ISO/IEC 14496_sections complying with the ISO/IEC 14496-1 standards, are used as a program stream type (stream_type) within a PMT. Particularly, "0x1F" is added for a scalable video stream type. However, this program stream type is a type for association with a stream that is transmitted through an advanced video coding (AVC) substream, and has limitations to inform a reception apparatus of association with a stream type available in DMB.

Accordingly, the DMB transmission apparatus according to yet another exemplary embodiment of the present invention sets the stream type to "0x21" and "0x22" such that the set stream type can be distinguished from a stream type of an AVC codec for DMB using a single layer and can correspond to each of the streams of DMB using multiple layers. However, the values "0x21" and "0x22" may be differently defined according to circumstances.

Meanwhile, in accordance with yet another exemplary embodiment of the present invention, for elementary streams transmitted for different transport streams, it is necessary to signal information about the configuration of scenes between objects, transmitted through the respective transport streams, and association information about the objects in order to configure the scenes. Information about additionally required elementary streams can be included within an object descriptor (OD) stream. However, in this case, a conventional reception apparatus cannot refer to additional associated elementary streams, and problems in reverse compatibility, such as an error being generated if information about elementary streams to which reference cannot be made is included, can be generated.

Accordingly, in the present exemplary embodiment, for elementary streams transmitted for the respective transport streams of multiple layers, a descriptor tag is newly defined as shown in FIG. 5 in order to signal information about the configuration of scenes between objects, transmitted through the respective transport streams, and association information about the objects for the configuration of the scenes. Accordingly, reference can be made to an IOD within another transport stream by making reference to a tag indicating a dependent IOD.

Here, the information about the configuration of scenes for objects according to the newly added IOD is added in parallel to scene configuration information that is transmitted through a base layer transport stream, enabling the configuration of the scenes.

In FIG. 5, the attribute of a URL flag (URL_Flag) in the descriptor is defined according to whether an IOD having dependency exists, URLlength is defined as a URL length, and URLstring is defined as an IOD location having dependency.

Further, in accordance with yet another exemplary embodiment of the present invention, information about the configuration of scenes between objects, transmitted through respective transport streams, and association information about the objects can be signaled through an object descriptor update (ObjectDescriptorUpdate). In accordance with the 14496-1 standards, objects for configuring scenes, a component descriptor, and so on can be dynamically updated through the object descriptor update. In particular, reference can be made to another IOD existing in a network or another storage through a URL within an OD existing within the object descriptor update. Further, reference can be made to another OD included in the newly referred IOD information or scene configuration information.

Accordingly, in the present invention, an IOD value transmitted through another transport stream, including information about an enhancement layer elementary stream, is indicated through a URL within the OD existing within (the object descriptor update) so that the IOD value can be referred.

Alternatively, a URL flag (URL_Flag) value within the IOD can be set to 1 so that reference can be made to an IOD location for an enhancement layer in URLstring.

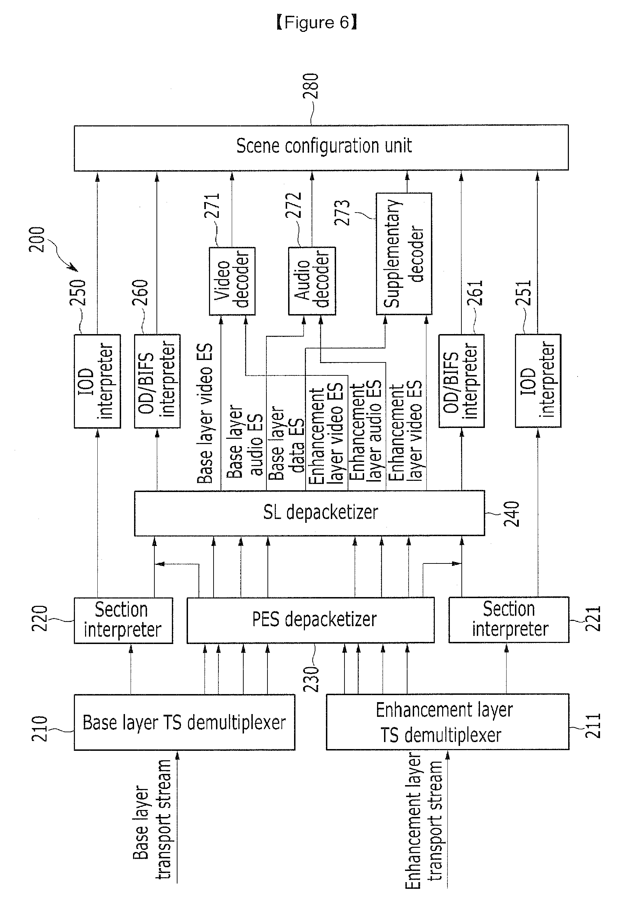

A DMB reception apparatus according to another exemplary embodiment of the present invention is described below with reference to FIG. 6.

FIG. 6 is a block diagram of the DMB reception apparatus according to another exemplary embodiment of the present invention.

Referring to FIG. 6, a DMB reception apparatus 200 includes a base layer TS demultiplexer 210, an enhancement layer TS demultiplexer 211, section interpreters 220 and 221, a PES depacketizer 230, an SL depacketizer 240, IOD interpreters 250 and 251, OD/BIFS interpreters 260 and 261, a video decoder 271, an audio decoder 272, a supplementary decoder 273, and a scene configuration unit 280.

The base layer TS demultiplexer 210 receives a base layer transport stream from the DMB transmission apparatus 100 and demultiplexes the received base layer transport stream. The enhancement layer TS demultiplexer 211 receives an enhancement layer transport stream from the DMB transmission apparatus 100 and demultiplexes the received enhancement layer transport stream.

The section interpreters 220 and 221 receive respective demultiplexed sections from the base layer TS demultiplexer 210 and the enhancement layer TS demultiplexer 211 and interpret the respective received demultiplexed sections.

The PES depacketizer 230 depackets demultiplexed PES packets.

The SL depacketizer 240 depackets the PES-depacketized SL packets.

The IOD interpreters 250 and 251 interpret respective IOD data received from the section interpreters 220 and 221. The OD/BIFS interpreters 260 and 261 interpret respective OD/BIFS streams. Further, the IOD interpreters 250 and 251 and the OD/BIFS interpreters 260 and 261 interpret signaling information including program-specific information and scene information.

The video decoder 271, the audio decoder 272, and the supplementary decoder 273 receive video, audio, and supplementary data elementary streams output by the SL depacketizer 240 and decode the respective video, audio, and supplementary data elementary streams.

The scene configuration unit 280 configures scenes on the basis of the output contents of the IOD interpreters 250 and 251 and the OD/BIFS interpreters 260 and 261 and the decoded video, audio, and supplementary data elementary streams.

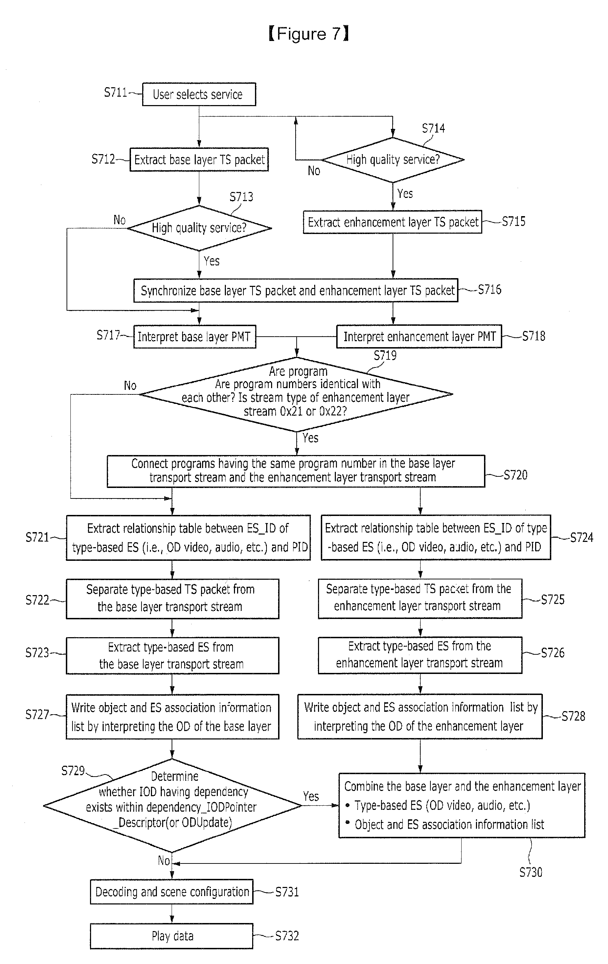

A method of receiving a DMB signal according to another exemplary embodiment of the present invention is described below with reference to FIG. 7.

FIG. 7 is a flowchart illustrating the method of receiving a DMB signal according to another exemplary embodiment of the present invention. Here, the method of receiving a DMB signal in the case in which the above transmission apparatus 100 does not include an additional information descriptor but includes association information between different transport streams in an ETl level and the reception apparatus 200 is informed of the association information is described.

Referring to FIG. 7, when a user selects a DMB service at step S711 and selects a base layer service, the base layer TS demultiplexer 210 of the DMB reception apparatus 200 extracts a base layer TS packet at step S712.

The base layer TS demultiplexer 210 determines whether the extracted base layer TS packet is a high quality service at step S713.

Meanwhile, when the user selects an enhancement layer service, the enhancement layer TS demultiplexer 211 determines whether the selected service is a high quality service at step S714. If, as a result of the determination, the selected service is determined to be a high quality service, the enhancement layer TS demultiplexer 211 extracts an enhancement layer TS packet at step S712.

Next, the base layer TS demultiplexer 210 and the enhancement layer TS demultiplexer 211 synchronize the base layer TS packet and the enhancement layer TS packet at step S716.

Next, the base layer TS demultiplexer 210 and the enhancement layer TS demultiplexer 211 interpret a base layer PMT and an enhancement layer PMT, respectively, at steps S717 and S718.

The base layer TS demultiplexer 210 and the enhancement layer TS demultiplexer 211 check whether the program number of the base layer transport stream is identical with the program number of the enhancement layer transport stream at step S719. Further, at the same time, the enhancement layer TS demultiplexer 211 determines whether the type of the enhancement layer stream is 0x21 or 0x22 at step S719.

Next, the base layer TS demultiplexer 210 and the enhancement layer TS demultiplexer 211 connect programs having the same program number in the base layer transport stream and the enhancement layer transport stream at step S720.

The base layer TS demultiplexer 210 extracts a relationship table between the elementary stream identifier of a type-based elementary stream (i.e., an object descriptor elementary stream, a video elementary stream, and an audio elementary stream) and a PID with reference to the results of PMT interpretation at step S721, separates a type-based TS packet from the base layer transport stream at step S722, and separates a type-based elementary stream from the base layer transport stream at step S723.

Further, the enhancement layer TS demultiplexer 211 extracts a relationship table between the elementary stream identifier of a type-based elementary stream (i.e., an object descriptor elementary stream, a video elementary stream, and an audio elementary stream) and a PID with reference to the results of PMT interpretation at step S724, separates a type-based TS packet from the enhancement layer transport stream at step S725, and separates a type-based elementary stream from the enhancement layer transport stream at step S726.

Next, the IOD interpreter 250 and the OD/BIFS interpreter 260 write an object and elementary stream association information list by interpreting the object descriptor of the base layer at step S727. The IOD interpreter 251 and the OD/BIFS interpreter 261 write an object and elementary stream association information list by interpreting the object descriptor of the enhancement layer at step S728.

The IOD interpreter 250 and the OD/BIFS interpreter 260 determine whether an IOD having dependency exists within a dependency IOD pointer descriptor (dependency_IODPointer_Descriptor) or an object descriptor update at step S729. If, as a result of the determination, the IOD having dependency is determined not to exist within the dependency IOD pointer descriptor or the object descriptor update, the video decoder 271, the audio decoder 272, and the supplementary decoder 273 perform decoding, and the scene configuration unit 280 configures scenes at step S731. Next, data are played at step S732.

Meanwhile, the IOD interpreter 251 and the OD/BIFS interpreter 261 writes the object and elementary stream association information list at step S728 and then combines the base layer and the enhancement layer. That is, the IOD interpreter 251 and the OD/BIFS interpreter 261 combine the type-based elementary stream and the object and elementary stream association information list in the base layer and the enhancement layer at step S730.

However, if the IOD interpreter 250 and the OD/BIFS interpreter 260 determine that the IOD having dependency does not exist within the dependency IOD pointer descriptor or the object descriptor update, the step S730 is performed. Next, the steps S731 and S732 are performed.

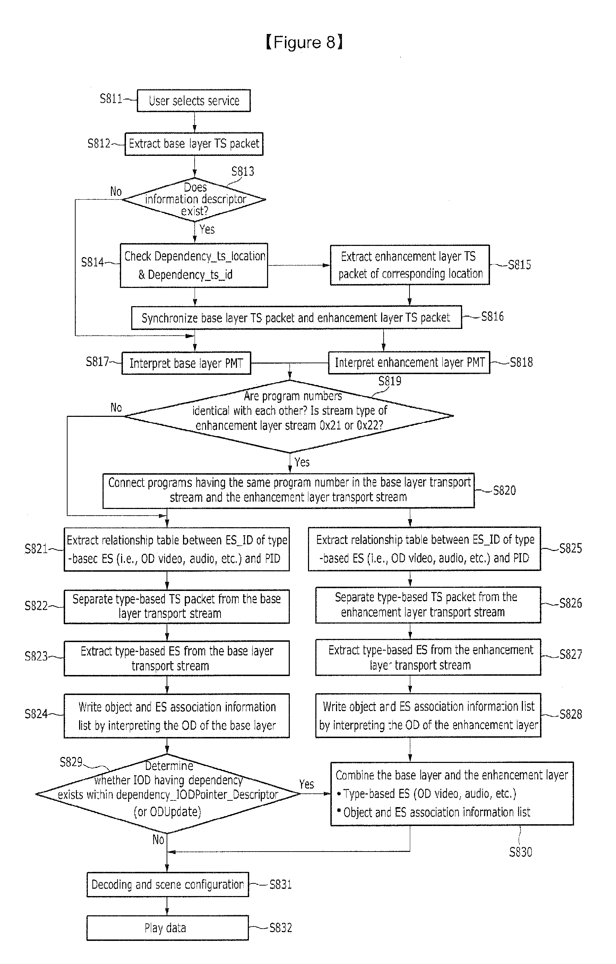

A method of receiving a DMB signal according to yet another exemplary embodiment of the present invention is described below with reference to FIG. 8.

FIG. 8 is a flowchart illustrating the method of receiving a DMB signal according to yet another exemplary embodiment of the present invention. Here, the method of receiving a DMB signal in the case in which the above transmission apparatus 100 transmits an information descriptor with it included in a base layer is described.

Referring to FIG. 8, when a user selects a DMB service at step S811, the base layer TS demultiplexer 210 of the DMB reception apparatus 200 extracts a base layer TS packet at step S812.

Next, the base layer TS demultiplexer 210 determines whether an information descriptor exists in the base layer transport stream at step S813. The information descriptor can be the scalable service pointer descriptor shown in Table 1 or the hierarchy descriptor shown in Table 2.

If, as a result of the determination, the information descriptor is determined to exist in the base layer transport stream, the base layer TS demultiplexer 210 checks a dependency transport stream location (dependency_ts_location) and a dependency transport stream identifier (dependency_ts_id) at step S814. Next, the base layer TS demultiplexer 210 extracts the enhancement layer TS packet of a corresponding location at step S815.

Next, the base layer TS demultiplexer 210 and the enhancement layer TS demultiplexer 220 synchronize the base layer TS packet and the enhancement layer TS packet at step S816.

Next, the base layer TS demultiplexer 210 and the enhancement layer TS demultiplexer 211 interpret a base layer PMT and an enhancement layer PMT, respectively, at steps S817 and S818. The base layer TS demultiplexer 210 and the enhancement layer TS demultiplexer 211 check whether the program number of the base layer transport stream is identical with the program number of the enhancement layer transport stream at step S819. Further, at the same time, the enhancement layer TS demultiplexer 211 determines whether the type of the enhancement layer stream is 0x21 or 0x22 at step S819.

Next, the base layer TS demultiplexer 210 and the enhancement layer TS demultiplexer 211 connect programs having the same program number in the base layer transport stream and the enhancement layer transport stream at step S7820.

The base layer TS demultiplexer 210 extracts a relationship table between the elementary stream identifier of a type-based elementary stream (i.e., an object descriptor elementary stream, a video elementary stream, and an audio elementary stream) and a PID with reference to the results of PMT interpretation at step S821, separates a type-based TS packet from the base layer transport stream at step S822, and separates a type-based elementary stream from the base layer transport stream at step S823.

Further, the enhancement layer TS demultiplexer 211 extracts a relationship table between the elementary stream identifier of a type-based elementary stream (i.e., an object descriptor elementary stream, a video elementary stream, and an audio elementary stream) and a PID with reference to the results of PMT interpretation at step S825, separates a type-based TS packet from the enhancement layer transport stream at step S826, and separates a type-based elementary stream from the enhancement layer transport stream at step S827.

Next, the IOD interpreter 250 and the OD/BIFS interpreter 260 write an object and elementary stream association information list by interpreting the object descriptor of the base layer at step S824. The IOD interpreter 251 and the OD/BIFS interpreter 261 write an object and elementary stream association information list by interpreting the object descriptor of the enhancement layer at step S828.

The IOD interpreter 250 and the OD/BIFS interpreter 260 determine whether an IOD having dependency exists within a dependency IOD pointer descriptor (dependency_IODPointer_Descriptor) or an object descriptor update at step S829. If, as a result of the determination, the IOD having dependency is determined not to exist within the dependency IOD pointer descriptor or the object descriptor update, the video decoder 271, the audio decoder 272, and the supplementary decoder 273 perform decoding, and the scene configuration unit 280 configures scenes at step S831. Next, data are played at step S832.

Meanwhile, the IOD interpreter 251 and the OD/BIFS interpreter 261 writes the object and elementary stream association information list at step S828 and then combine the base layer and the enhancement layer. That is, the IOD interpreter 251 and the OD/BIFS interpreter 261 combine the type-based elementary stream and the object and elementary stream association information list in the base layer and the enhancement layer at step S830.

However, if the IOD interpreter 250 and the OD/BIFS interpreter 260 determine that the IOD having dependency does not exist within the dependency IOD pointer descriptor or the object descriptor update, the step S830 is performed. Next, the steps S831 and S832 are performed.

Meanwhile, if, as a result of the determination at step S813, the information descriptor is determined not to exist in the base layer transport stream, the step S817 is performed. Here, if the information descriptor does not exist, the steps S818, S825, S826, S827, S828, and S830 of interpreting the enhancement layer are not performed because a high quality service is not provided.

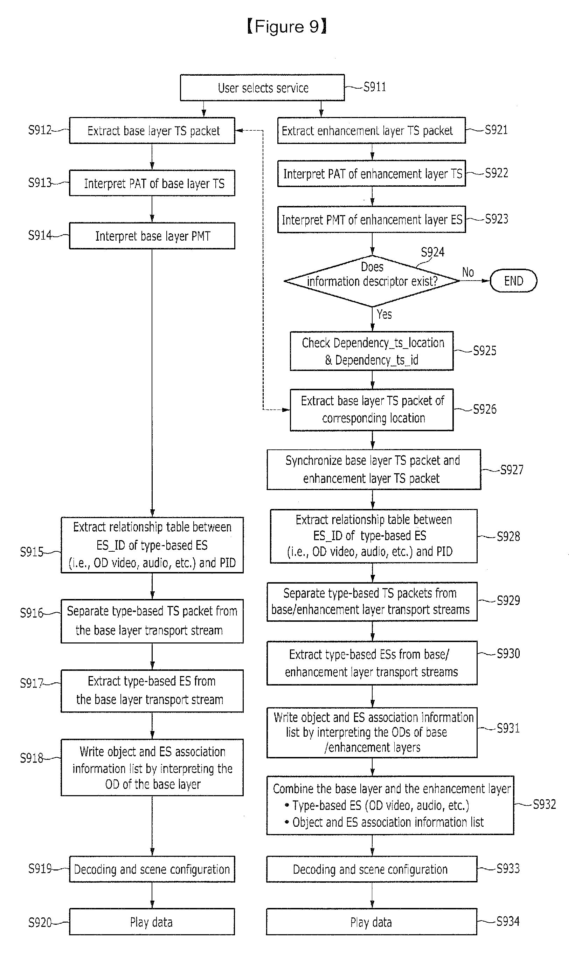

A method of receiving a DMB signal according to yet another exemplary embodiment of the present invention is described below with reference to FIG. 9.

FIG. 9 is a flowchart illustrating a method of receiving a DMB signal according to yet another exemplary embodiment of the present invention. The method of receiving a DMB signal in the case in which the above transmission apparatus 100 transmits an information descriptor with it included in an enhancement layer is described.

Referring to FIG. 9, when a user selects a DMB service at step S911, the base layer TS demultiplexer 210 of the DMB reception apparatus 200 extracts a base layer TS packet at step S912. Next, the base layer TS demultiplexer 210 interprets the program association table (PAT) of the base layer transport stream at step S913 and interprets the PMT of the base layer at step S914.

Next, the base layer TS demultiplexer 210 extracts a relationship table between the elementary stream identifier of a type-based elementary stream (i.e., an object descriptor elementary stream, a video elementary stream, and an audio elementary stream) and a PID with reference to the results of PMT interpretation at step S915, separates a type-based TS packet from the base layer transport stream at step S916, and separates a type-based elementary stream from the base layer transport stream at step S917.

Next, the IOD interpreter 250, the OD/BIFS interpreter 260, and the base layer TS demultiplexer 210 write an object and elementary stream association information list by interpreting the object descriptor of the base layer.

Next, the video decoder 271, the audio decoder 272, and the supplementary decoder 273 perform decoding, and the scene configuration unit 280 configures scenes at step S919. Next, data are played at step S920.

Meanwhile, when the user selects a DMB service at step S911, the enhancement layer TS demultiplexer 211 of the DMB reception apparatus 200 extracts an enhancement layer TS packet at step S921. Next, the enhancement layer TS demultiplexer 211 interprets the PAT of the enhancement layer transport stream at step S922 and interprets the PMT of the enhancement layer at step S923.

Next, the enhancement layer TS demultiplexer 211 determines whether an information descriptor exists in the enhancement layer transport stream at step S924. The information descriptor can be the scalable service pointer descriptor shown in Table 1 or the hierarchy descriptor shown in Table 2.

If, as a result of the determination, an information descriptor is determined not to exist in the enhancement layer transport stream, the process is terminated. However, if, as a result of the determination, an information descriptor is determined to exist in the enhancement layer transport stream, the enhancement layer TS demultiplexer 211 checks a dependency transport stream location (dependency_ts_location) and a dependency transport stream identifier (dependency_ts_id) at step S925. Next, the enhancement layer TS demultiplexer 211 extracts the base layer TS packet of a corresponding location at step S926.

Next, the enhancement layer TS demultiplexer 220 synchronizes the base layer transport stream and the enhancement layer transport stream at step S927.

Next, the enhancement layer TS demultiplexer 220 extracts a relationship table between the elementary stream identifier of a type-based elementary stream (i.e., an object descriptor elementary stream, a video elementary stream, and an audio elementary stream) and a PID with reference to the results of PMT interpretation at step S928, separates type-based TS packets from the base layer transport stream and the enhancement layer transport stream at step S929, and separates type-based elementary streams from the base layer transport stream and the enhancement layer transport stream at step S930. Here, in the case in which a transmitter allocates different program numbers within the PMT of a base layer and the PMT of an enhancement layer, a receiver can use the allocated program numbers to distinguish two services from each other. Next, the IOD interpreter 251 and the OD/BIFS interpreter 261 write respective object and elementary stream association information lists by interpreting the object descriptors of the base layer and the enhancement layer at step S931, and then combine the base layer and the enhancement layer. That is, the IOD interpreter 251 and the OD/BIFS interpreter 261 combine the type-based elementary streams and the object and elementary stream association information lists in the base layer and the enhancement layer, respectively, at step S932.

Next, the video decoder 271, the audio decoder 272, and the supplementary decoder 273 perform decoding, and the scene configuration unit 280 configures scenes at step S933. Next, data are played at step S934.

The above-described exemplary embodiments of the present invention are not implemented only through a method and apparatus, but may be implemented through a program to realize a function corresponding to the construction of the exemplary embodiment of the present invention or a recording medium in which the program is recorded.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A transmission apparatus for broadcasting service, comprising:
a sync layer (SL) packetizer for receiving a base layer elementary stream and an enhancement layer elementary stream, and generating SL packets for the base layer elementary stream and an SL packet for the enhancement layer elementary stream, respectively;
a packetized elementary stream (PES) packetizer for converting the SL packets into respective PES packets;
a first transport stream (TS) multiplexer for multiplexing the PES packet and outputting a base layer transport stream; and
a second TS multiplexer for multiplexing the PES packet and outputting an enhancement layer transport stream,
wherein the second TS multiplexer inserts a descriptor, comprising information about whether the enhancement layer transport stream is dependent on the base layer transport stream, into the enhancement layer transport stream.

2. The transmission apparatus of claim 1, wherein the descriptor further comprises information indicating an identifier of the base layer transport stream on which the enhancement layer transport stream is dependent.

3. The transmission apparatus of claim 1, wherein the descriptor further comprises information about a service type supported by the enhancement layer transport stream.

4. The transmission apparatus of claim 1, wherein the descriptor further comprises information indicating a length of the descriptor.

5. The transmission apparatus of claim 1, wherein the descriptor is inserted into a program map table (PMT) of the enhancement layer transport stream.

6. The transmission apparatus of claim 1, wherein the first TS multiplexer and the second TS multiplexer differently set respective program numbers (program_number) of the base layer transport stream and the enhancement layer transport stream.

7. A method of a transmission apparatus for broadcasting service transmitting a broadcasting signal, the method comprising:
generating SL packets for a base layer elementary stream and an enhancement layer elementary stream based on the base layer elementary stream and the enhancement layer elementary stream;
converting the SL packets into respective PES packets;
generating a base layer transport stream by multiplexing the PES packet;
generating an enhancement layer transport stream by multiplexing the PES packet; and
inserting a descriptor, comprising information about whether the enhancement layer transport stream is dependent on the base layer transport stream, into the enhancement layer transport stream.

8. The method of claim 7, wherein the descriptor further comprises information indicating an identifier of the base layer transport stream on which the enhancement layer transport stream is dependent.

9. The method of claim 7, wherein the descriptor further comprises information about a service type supported by the enhancement layer transport stream.

10. The method of claim 7, wherein the descriptor further comprises information indicating a length of the descriptor.

11. The method of claim 7, further comprising differently setting respective program numbers (program_number) of the base layer transport stream and the enhancement layer transport stream.

12. A reception apparatus for broadcasting service, comprising:
a first TS demultiplexer for receiving a base layer transport stream from a transmission apparatus and demultiplexing the base layer transport stream;
a second TS demultiplexer for receiving an enhancement layer transport stream from the transmission apparatus and demultiplexing the enhancement layer transport stream;
a first interpreter for interpreting signaling information comprised in the base layer transport stream; and
a second interpreter for interpreting signaling information comprised in the enhancement layer transport stream,
wherein the second TS demultiplexer extracts a pertinent packet of the base layer transport stream by checking a descriptor that is configured to include information about whether the enhancement layer transport stream is dependent on the base layer transport stream and included in the enhancement layer transport stream.

13. The reception apparatus of claim 12, wherein
the first interpreter comprises a first initial object descriptor (IOD) interpreter and a second object descriptor/binary format for scenes (OD/BIFS) interpreter, and
the second interpreter comprises a second IOD interpreter and a second OD/BIFS interpreter.

14. The reception apparatus of claim 12, wherein the descriptor further comprises information indicating an identifier of the base layer transport stream on which the enhancement layer transport stream is dependent, information about a service type supported by the enhancement layer transport stream, and information indicating a length of the descriptor.

15. The reception apparatus of claim 12, wherein
program numbers of the base layer transport stream and the enhancement layer transport stream are differently set, and
the first TS demultiplexer and the second TS demultiplexer extract information of a broadcasting signal using the respective program numbers.

16. A method of a reception apparatus for broadcasting service receiving a broadcasting signal, the method comprising:
receiving a base layer transport stream from a transmission apparatus and first demultiplexing the base layer transport stream; and
receiving an enhancement layer transport stream from the transmission apparatus and second demultiplexing the enhancement layer transport stream,
wherein the second demultiplexing comprises
interpreting a PMT of the enhancement layer transport stream,
checking a descriptor comprised in the PMT of the enhancement layer transport stream and configured to include information about whether the enhancement layer transport stream is dependent on the base layer transport stream, and
extracting a pertinent packet of the base layer transport stream based on the information of the descriptor.

17. The method of claim 16, wherein the descriptor further comprises information indicating an identifier of the base layer transport stream on which the enhancement layer transport stream is dependent, information about a service type supported by the enhancement layer transport stream, and information indicating a length of the descriptor.

18. The method of claim 16, wherein
program numbers of the base layer transport stream and the enhancement layer transport stream are differently set, and
the method further comprises extracting information of a broadcasting signal using the respective program numbers of the base layer transport stream and the enhancement layer transport stream.

19. The method of claim 16, wherein the second demultiplexing further comprises:
synchronizing the base layer transport stream and the enhancement layer transport stream, and
extracting respective elementary streams from the base layer transport stream and the enhancement layer transport stream.

20. The method of claim 16, further comprising:
interpreting an object descriptor (OD) of each of a base layer and an enhancement layer; and
combining the base layer and the enhancement layer.

21. A transmission apparatus for broadcasting service, comprising:
an SL packetizer for receiving a base layer elementary stream and an enhancement layer elementary stream and generating an SL packet for the base layer elementary stream and an SL packet for the enhancement layer elementary stream;
a PES packetizer for converting the SL packets into respective PES packets;
a first TS multiplexer for multiplexing the PES packet and outputting a base layer transport stream; and
a second TS multiplexer for multiplexing the PES packet and outputting an enhancement layer transport stream,
wherein the first TS multiplexer inserts a descriptor including information about an association between the enhancement layer transport stream and the base layer transport stream, information indicating an identifier of an associated transport stream, information about a service type supported by the enhancement layer transport stream, and information indicating a length of the descriptor into the base layer transport stream.

22. The transmission apparatus of claim 21, wherein the first TS multiplexer and the second TS multiplexer identically set respective program numbers of the base layer transport stream and the enhancement layer transport stream.

23. The transmission apparatus of claim 21, wherein the first TS multiplexer and the second TS multiplexer differently set respective program numbers of the base layer transport stream and the enhancement layer transport stream.

24. A transmission apparatus for broadcasting service, comprising:
an SL packetizer for receiving a base layer elementary stream and an enhancement layer elementary stream, and generating an SL packet for the base layer elementary stream and an SL packet for the enhancement layer elementary stream;
a PES packetizer for converting the SL packets into respective PES packets;
a first TS multiplexer for multiplexing the PES packet and outputting a base layer transport stream; and
a second TS multiplexer for multiplexing the PES packet and outputting an enhancement layer transport stream,
wherein the first TS multiplexer and the second TS multiplexer maintain an identical system time clock (STC).

25. A method of a reception apparatus for broadcasting service receiving a broadcasting signal, the method comprising:
receiving a base layer transport stream from a transmission apparatus and first demultiplexing the base layer transport stream; and
receiving an enhancement layer transport stream from the transmission apparatus and second demultiplexing the enhancement layer transport stream,
wherein the first demultiplexing comprises
checking a descriptor included in the base layer transport stream and configured to include information about an association between the enhancement layer transport stream and the base layer transport stream, and
extracting a pertinent packet of the enhancement layer transport stream based on the information of the descriptor.

26. The method of claim 25, further comprising:
checking whether program numbers of the enhancement layer transport stream and the base layer transport stream are identical to each other; and
connecting programs having an identical program number in the enhancement layer transport stream and the base layer transport stream.

27. The method of claim 25, further comprising:
checking whether program numbers of the enhancement layer transport stream and the base layer transport stream are different from each other; and
extracting information of the broadcasting signal using pieces of PMT information composed of the respective program numbers.

28. The method of claim 25, further comprising checking a stream type (stream_type) of the enhancement layer.
